(19) Europäisches Patentamt
European Patent Office
Office européen des brevets

(11) EP 3 199 985 A1

(12) **EUROPEAN PATENT APPLICATION**
published in accordance with Art. 153(4) EPC

(43) Date of publication:
**02.08.2017 Bulletin 2017/31**

(21) Application number: **15844429.9**

(22) Date of filing: **08.09.2015**

(51) Int Cl.:
***G02B 1/115*** *(2015.01)* ***B32B 3/30*** *(2006.01)*
***B32B 7/02*** *(2006.01)* ***G02B 5/02*** *(2006.01)*

(86) International application number:
**PCT/JP2015/004542**

(87) International publication number:
**WO 2016/047059 (31.03.2016 Gazette 2016/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **22.09.2014 JP 2014192818**

(71) Applicant: **Panasonic Intellectual Property Management Co., Ltd.**
**Osaka-shi, Osaka 570-6207 (JP)**

(72) Inventors:
- **OISHI, Toshiharu**
**1-61, Shiromi 2-chome, Chuo-ku,**
**Osaka-shi**
**Osaka 540-6207 (JP)**
- **FUJIMOTO, Takahide**
**1-61, Shiromi 2-chome, Chuo-ku,**
**Osaka-shi**
**Osaka 540-6207 (JP)**

(74) Representative: **Grünecker Patent- und Rechtsanwälte**
**PartG mbB**
**Leopoldstraße 4**
**80802 München (DE)**

# (54) ANTIREFLECTION MEMBER

(57) An anti-reflection member has reflection characteristics wherein a specular reflection component of reflected light is 0.15% or less and a diffuse reflection component of the reflected light is in a range from 0.25% to 0.65%, inclusive.

FIG. 2

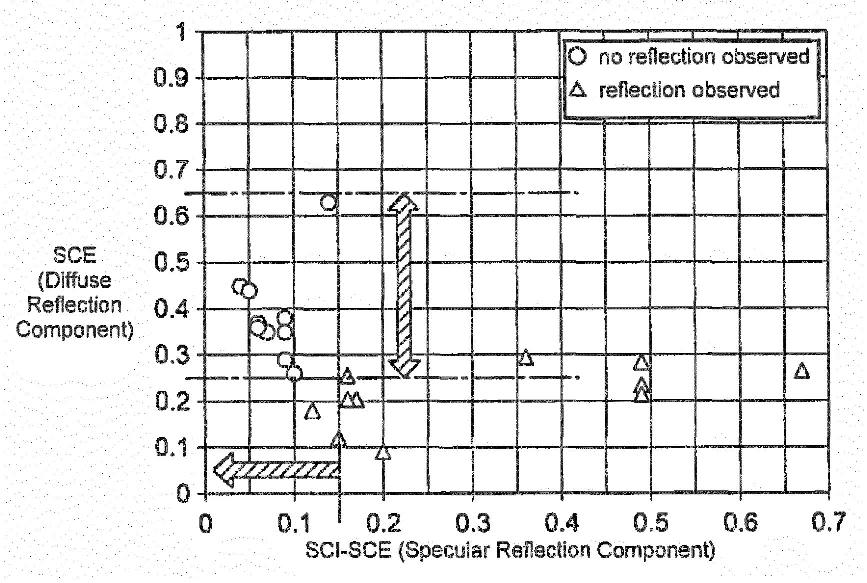


EP 3 199 985 A1

Printed by Jouve, 75001 PARIS (FR)

## Description

TECHNICAL FIELD

The present invention relates to anti-reflection members.

BACKGROUND ART

In recent years, display devices have been used for an increasing number of applications. Consequently, the display devices are more likely to be used under the circumstances that result in lower visibility, such as under the environment in which the display devices are exposed to ambient light or light from a lighting apparatus. For this reason, the demand for display panels of the display devices with improved anti-reflection performance has been increasing.

The techniques for treating reflection include an AR (anti-reflection) technique, in which reflected light is reduced by canceling out reflected light rays with each other using a multi-layered film, and an AG (anti-glare) technique, in which reflected light is diffused and made less perceptible by an anti-glare layer having a fine uneven structure. However, when reflection occurs due to the light from a lighting apparatus or the like, the AR technique permits the contour of the lighting apparatus to become visible, so the visibility of the display lowers in that regard. On the other hand, with the AG technique, diffused reflected light causes the reflecting portion to appear white, thereby degrading the visibility of the display.

As conventional techniques, Patent Literature (PTL) 1 discloses an anti-glare plastic film in which a transparent resin coated on a substrate is provided with a fine uneven pattern. Patent Literature (PTL) 2 discloses an anti-reflection film in which a low-refractive index layer is formed on an anti-glare layer having a fine uneven structure. The low-refractive index layer is formed by coating and curing a resin.

CITATION LIST

Patent Literature

PTL 1: Japanese Patent Unexamined Publication No. H06-234175
PTL 2: International Publication No. 2008/084604

SUMMARY OF INVENTION

The present invention provides an anti-reflection member having high anti-reflection performance.

An anti-reflection member according to an aspect of the present invention has reflection characteristics wherein a specular reflection component of reflected light is 0.15% or less and a diffuse reflection component of the reflected light is in a range from 0.25% to 0.65%, inclusive.

The present invention makes it possible to provide an anti-reflection member having high anti-reflection performance.

BRIEF DESCRIPTION OF DRAWINGS

Fig. 1 is a view illustrating an anti-reflection member of an exemplary embodiment.
Fig. 2 is a characteristics graph illustrating evaluation results for anti-reflection members.
Fig. 3 is a view illustrating components of reflected light in the characteristics graph of Fig. 2.
Fig. 4 is a schematic view illustrating an anti-reflection member of a first exemplary embodiment.
Fig. 5 is a view for illustrating an inclination angle of a fine uneven structure of the first exemplary embodiment.
Fig. 6 is a schematic view illustrating an anti-reflection member of a second exemplary embodiment.
Fig. 7 is a view for illustrating an inclination angle of a fine uneven structure of the second exemplary embodiment.
Fig. 8 is a view illustrating an anti-reflection layer.
Fig. 9 is a graph showing the relationship between film thickness ratio and reflectivity of the anti-reflection layer.
Fig. 10A is a schematic view illustrating an inclination angle of one example of a fine uneven structure of a comparative example.
Fig. 10B is a top plan view of the example of the fine uneven structure of the comparative example.

Fig. 11A is a view for illustrating a first variation example of the shape of the anti-reflection member.
Fig. 11B is a view for illustrating a second variation example of the shape of the anti-reflection member.
Fig. 11C is a view for illustrating a third variation example of the shape of the anti-reflection member.
Fig. 11D is a view for illustrating a fourth variation example of the shape of the anti-reflection member.
Fig. 12A is a view for illustrating a first step in a first example of a method for preparing a mold for forming an anti-glare layer.
Fig. 12B is a view for illustrating a second step in the first example of the method for preparing the mold for forming the anti-glare layer.
Fig. 12C is a schematic view illustrating the final shape of the mold in the first example of the method for preparing the mold for forming the anti-glare layer.
Fig. 13A is a view for illustrating a first step in a second example of a method for preparing a mold for forming an anti-glare layer.
Fig. 13B is a view for illustrating a second step in the second example of the method for preparing the mold for forming the anti-glare layer.
Fig. 13C is a schematic view illustrating the final shape of the mold in the second example of the method for preparing the mold for forming the anti-glare layer.
Fig. 14 is a schematic view illustrating a fine uneven structure prepared using the mold shown in Fig. 13C.
Fig. 15A is a view for illustrating a first step in a third example of a method for preparing a mold for forming an anti-glare layer.
Fig. 15B is a schematic view illustrating the final shape of the mold in the third example of the method for preparing the mold for forming the anti-glare layer.
Fig. 16 is a schematic view illustrating a fine uneven structure prepared using the mold shown in Fig. 15B.

DESCRIPTION OF EMBODIMENTS

Prior to describing exemplary embodiments of the present invention, problems with the conventional technologies are described briefly. When an anti-reflection layer by the AR technique is provided over an anti-glare layer by the AG technique, the drawbacks of both techniques are compensated, so that the anti-reflection performance can be improved. However, it is believed that the reflection characteristics of the anti-glare layer and the reflection characteristics of the anti-reflection layer are not independent from each other. The present inventors have focused attention to the fact that the overall anti-reflection capability is determined by both the reflection characteristics of the anti-glare layer and the reflection characteristics of the anti-reflection layer influencing on each other.

Hereafter, exemplary embodiments of the present invention will be described in detail with reference to the drawings. In the exemplary embodiments, same elements are designated by the same reference signs and the description thereof may be omitted.

Fig. 1 is a view illustrating an anti-reflection member according to an exemplary embodiment of the present invention.

Anti-reflection member 10 according to the exemplary embodiment of the present invention includes anti-glare layer 13 and anti-reflection layer 14 on one surface of transparent substrate 12. Anti-reflection layer 14 is formed over anti-glare layer 13.

Anti-reflection member 10 of the exemplary embodiments has reflection characteristic values including a diffuse reflection component in a range from 0.25% to 0.65%, inclusive, and a specular reflection component of 0.15% or less. Such reflection characteristic values make it possible to obtain desirable visual evaluation for reflected light.

Next, a description is made about a visual evaluation test and evaluation results of anti-reflection members 10.

Fig. 2 is a characteristics graph illustrating the reflection characteristics of anti-reflection members according to the exemplary embodiments of the present invention. Fig. 3 is a view illustrating components of reflected light in the characteristics graph of Fig. 2.

The visual evaluation test is carried out for a plurality of samples of anti-reflection members by causing light to reflect thereon and evaluating whether or not reflection is observed by each of five evaluators.

In each of the samples used, an anti-reflection member in a film shape having dimensions of 90 mm × 90 mm is bonded on a black PMMA [poly(methyl methacrylate)] plate using OCA (optically clear adhesive).

The condition of light reflection is such that light of a three-wavelength fluorescent lamp (what is called F10 fluorescent lamp) is incident on each of the samples in a laboratory in which the ambient illuminance is set at 1000 lux (which is about two times the illuminance of light in the vehicle cabin of an automobile in a clear weather).

The method of evaluation is such that five evaluators determine whether each evaluator can see a reflected image of a fluorescent lamp and whether each evaluator senses a black level of the entire sheet (or a level of white tinge originating from light reflection).

The diffuse reflection component and the specular reflection component of each of the samples are measured using a spectrophotometer (CM-700d made by Konica Minolta Inc.). The diffuse reflection component refers to the proportion of diffuse light (SCE: Specular Component Excluded) with respect to the total incident light, and the diffuse light refers to the reflected light in which specular reflected light is excluded from the total reflected light (see Fig. 3). The specular reflection component refers to the proportion of the specular reflected light with respect to the total incident light, and the specular reflected light refers to the reflected light in which diffuse light (SCE: Specular Component Excluded) is excluded from the total reflected light (SCI: Specular Component Included) (see Fig. 3).

As a result of such a visual evaluation test as described above, for the samples having the reflection characteristic values according to the present exemplary embodiments (the diffuse reflection component is in a range from 0.25% to 0.65%, inclusive, and the specular reflection component is 0.15% or less), no reflection is observed as represented by the circle plots in Fig. 2.

On the other hand, for the samples having a specular reflection component of greater than 0.15%, it is evaluated that the contour of the reflection of the fluorescent lamp is visible, and for the samples having a diffuse reflection component of greater than 0.65%, it is evaluated that the black level of the entire sheet is gradually lowered.

Moreover, for the samples having a specular reflection component of 0.15% or less but a diffuse reflection component of 0.25% or less, it is evaluated that the contour of the reflection of the fluorescent lamp is slightly visible.

From the just-described results of the visual evaluation test, it is found that the visibility of the contour of the light source resulting from specular reflection can be significantly reduced and also the white tinge resulting from diffuse light can be significantly reduced by employing the reflection characteristic values (i.e., a diffuse reflection component in a range from 0.25% to 0.65%, inclusive, and a specular reflection component of 0.15%). The anti-reflection member of the present exemplary embodiments makes it possible to obtain significantly high anti-reflection performance because of the above-described reflection characteristic values.

< Specific Examples of Anti-reflection Member >

As an example of the method for obtaining the above-described reflection characteristic values, it is possible to form an anti-glare layer having a fine uneven structure, and a multi-layered film on top of the anti-glare layer, serving as an anti-reflection layer. However, this structure causes variations in film thickness of the anti-reflection layer because of the inclinations of unevenness in the fine uneven structure, and it is difficult to obtain desirable characteristics, a specular reflection component of 0.15% or less.

Hereinafter, some specific configuration examples of the anti-reflection member that achieves the above-described reflection characteristics and methods for manufacturing the same will be described. It should be noted that the following configuration examples and the manufacturing methods are merely examples, and the present invention is not limited thereto.

(First and Second Exemplary Embodiments)

Fig. 4 is a schematic view illustrating an anti-reflection member of a first exemplary embodiment. Fig. 5 is a view for illustrating an inclination angle of a fine uneven structure of the first exemplary embodiment.

Anti-reflection member 10 according to the first exemplary embodiment includes sheet-shaped substrate 12, fine uneven structure 20 formed on one surface of substrate 12, and anti-reflection layer 14 formed on top of fine uneven structure 20.

Fine uneven structure 20 functions as an anti-glare layer for diffusing light. Fine uneven structure 20 is a structure in which the surface has a multiplicity of unevenness (for example, a multiplicity of spherical surface-shaped convex portions 21). The horizontal pitch of the unevenness is within the range from 0.5 to 10 [$\mu$m], and specifically, an example is about 2 [$\mu$m]. The anti-glare layer of the present exemplary embodiment employs a structure in which microparticles (equivalent to filler) that cause light diffusion within the layer are not impregnated in the layer.

As illustrated in Fig. 5, fine uneven structure 20 is formed such that inclination angle $\theta$ of the uneven surface is controlled. In the first exemplary embodiment, fine uneven structure 20 is formed so that the surface having an inclination angle of equal to or less than specific angle $\theta 1$ = 36.8° occupies 60% or greater of the area, when viewed in plan, of the surface in which fine uneven structure 20 is formed. The inclination angle is indicated by an inclination angle from the top surface of substrate 12. In Fig. 5, the bold lines indicate the ranges exceeding specific angle $\theta 1$. In Fig. 5, line V0 indicates the perpendicular line to the top surface of substrate 12, and line h0 indicates the normal line to the uneven surface.

The portion having an inclination angle of equal to or less than specific angle $\theta 1$ enables anti-reffection layer 14 to provide good characteristics. Therefore, when the area of this portion increases, the anti-reflection performance of anti-reflection member 10 is improved. Accordingly, the area occupied by the portion in which the inclination angle is equal to or less than specific angle $\theta 1$ may preferably be set to 70% or greater, or more preferably 80% or greater, of the surface in which fine uneven structure 20 is formed.

The reason for setting the proportion of the area in which the inclination angle is equal to or less than specific angle θ1 to be 60% or greater in the first exemplary embodiment will be described later.

The details of anti-reflection layer 14 will be described later.

Fig. 6 is a schematic view illustrating an anti-reflection member of a second exemplary embodiment. Fig. 7 is a view for illustrating an inclination angle of a fine uneven structure of the second exemplary embodiment.

Anti-reflection member 10A of the second exemplary embodiment includes sheet-shaped substrate 12, fine uneven structure 20 formed on one surface of substrate 12, and anti-reflection layer 14A formed on top of fine uneven structure 20.

As illustrated in Fig. 7, fine uneven structure 20 is formed such that inclination angle θ of the uneven surface is controlled. In the second exemplary embodiment, fine uneven structure 20 is formed so that the area in which the inclination angle is equal to or less than specific angle θ2 = 48.1° occupies 70% or greater of the area, when viewed in plan, of the surface in which fine uneven structure 20 is formed. In Fig. 7, the bold lines indicate the ranges exceeding specific angle θ2.

The portion having an inclination angle of equal to or less than specific angle θ2 enables anti-reflection layer 14A to provide desirable characteristics. Accordingly, an increase of the area with this range leads to improved anti-reflection performance of anti-reflection member 10A. Accordingly, the area occupied by the portion in which the inclination angle is equal to or less than specific angle θ2 may preferably be set to 80% or greater, or more preferably 90% or greater, of the surface in which fine uneven structure 20 is formed.

The reason for setting the proportion of the area in which the inclination angle is equal to or less than specific angle θ2 to be 70% or greater in the second exemplary embodiment will be described later.

Fig. 8 is a view illustrating an example of the anti-reflection layer. Fig. 9 is a graph showing an example of the relationship between film thickness ratio and reflectivity of the examples of the anti-reflection layer.

Each of anti-reflection layers 14, 14A is constructed by laminating four or more layers of a plurality of kinds of oxide films. Each of anti-reflection layers 14, 14A is composed of, for example, transparent metal oxides, such as $SiO_2$ $TiO_2$, and $Al_2O_3$. The material for each of anti-reflection layers 14, 14A may be other materials than oxides, such as metals, fluorides, and sulfides. Each of anti-reflection layers 14, 14A is formed such that the refractive index and the film thickness of each of the films are controlled, and it reduces reflected light by overlapping light rays reflected at various interfaces at different phases to cancel out the light rays each other. The total thickness of each of anti-reflection layers 14, 14A varies depending on the types and numbers of the films, but it is typically from 300 to 500 nm, which is significantly thinner than the amount of unevenness of fine uneven structure 20.

Each of the films in anti-reflection layer 14, 14A may be formed using a dry process, such as vapor deposition and sputtering. Vacuum deposition and sputtering are included in the process of condensing a source material evaporated in vacuum onto a surface. Each of the films may also be formed using a wet process, such as chemical liquid phase growth. In each of anti-reflection layers 14, 14A, a thin film formed by a dry process and a thin film formed by a wet process may be laminated on each other.

As illustrated in Fig. 9, each of anti-reflection layers 14, 14A shows varied reflectivity of visible light as the film thickness changes. In the relationship graph of film thickness and reflectivity, there is a film thickness range with lower reflectivity than that in the other ranges. For example, the reflectivity in the range is equal to or less than 1 percent because the light rays reflected at various interfaces are cancelled out each other efficiently. When the film thickness is greater or less than this film thickness range, the reflectivity increases drastically.

In each of anti-reflection layers 14, 14A, when the median film thickness of the film thickness range resulting in low reflectivity is defined as a film thickness ratio of 1, the range of the film thickness ratio resulting in low reflectivity is from 0.8 to 1.2, as illustrated in Fig. 9.

Anti-reflection layer 14 of the first exemplary embodiment is formed so that a film thickness ratio of 1 is obtained when the inclination angle of the base plate is zero. Under this condition, in the portion having inclination angle θ, the area to be coated with thin film particles increases corresponding to inclination angle θ with respect to a certain amount of thin film particles scattered by vapor deposition, for example. For this reason, the film thickness of the portion having inclination angle θ is thinner than the portion having an inclination angle of zero. Where the portion having an inclination angle of zero is assumed to have film thickness X, film thickness X1 of the portion having inclination angle θ is expressed by the following equation (1).

$$X1 = X \times \cos\theta \qquad (1)$$

Therefore, in anti-reflection layer 14 of the first exemplary embodiment, the film thickness of the thin film that is formed on a surface having an inclination angle of 0° to specific angle θ1 (= 36.8°) results in a film thickness ratio from 1 to 0.8, as indicated by range W1 in Fig. 9. Within this film thickness range, the reflectivity becomes 1% or less, resulting in good anti-reflection performance. In the surface having an inclination angle exceeding specific angle θ1, the reflectivity of anti-reflection layer 14 drastically increases as the inclination angle increases.

As described above, according to the first exemplary embodiment, anti-reflection layer 14 yields good performance when the area resulting in an inclination angle of 0° to specific angle θ1 (= 36.8°) occupies 60% or greater.

Anti-reflection layer 14A of the second exemplary embodiment is formed so that a film thickness ratio of 1.2 is obtained when the inclination angle of the base plate is zero.

As described above, where the portion having an inclination angle of zero is assumed to have film thickness X, film thickness X1 of the portion having inclination angle θ is expressed by equation (1). Therefore, the film thickness of anti-reflection layer 14A that is formed on a surface having an inclination angle of 0° to specific angle θ2 (= 48.1°) results in a film thickness ratio of from 1.2 to 0.8, as indicated by range W2 in Fig. 9. Anti-reflection layer 14A having a film thickness falling within this film thickness range shows a reflectivity of 1% or less, resulting in preferable anti-reflection performance. In the surface having an inclination angle exceeding specific angle θ2, the reflectivity of anti-reflection layer 14A drastically increases as the inclination angle increases.

As described above, according to the second exemplary embodiment, anti-reflection layer 14 yields good performance in a case where the area resulting in an inclination angle of 0° to specific angle θ2 (= 48.1°) occupies 70% or greater.

< Comparative Example >

Here, the following describes the reason for setting the area resulting in an inclination angle of equal to or less than specific angle θ1 to 60% or greater in the first exemplary embodiment and the reason for setting the area resulting in an inclination angle of equal to or less than specific angle θ2 to 70% or greater in the second exemplary embodiment, with reference to Figs. 10A and 10B.

Fig. 10A shows a schematic view illustrating an inclination angle of a fine uneven structure of a comparative example, and Fig. 10B shows a top plan view of the fine uneven structure of the comparative example.

The fine uneven structure of the comparative example shown in Figs. 10A and 10B is a model in which hemispheres having the same diameter are densely arrayed on one surface of substrate 50. The bold line portions in Fig. 10A and the hatched portions in Fig. 10B schematically represent the portions with inclination angles at which the film thickness ratio of the anti-reflection layer falls outside the range from 0.8 to 1.2.

Here, if the anti-reflection layer is prepared with a film thickness ratio of 1.0 on a flat surface, the inclination angle θ in Fig. 10A should be 36.8°, as described previously. Likewise, if the anti-reflection layer is prepared with a film thickness ratio of 1.2 on a flat surface, the inclination angle θ in Fig. 10A should be 48.1°.

The proportion of the bold line portions in Fig. 10A with respect to the surface in which the fine uneven structure is formed is geometrically similar to the proportion of the hatched portions in triangle T shown in Fig. 10B, when viewed in plan. Reference symbol r2 represents the radius of the inner circle of the bold line portion when viewed in plan, and reference symbol r1 represents the radius of the outer circle of the bold line portion when viewed in plan. From these conditions, the proportion of the area other than the bold line portions when viewed in plan can be obtained in the following manner.

First, the length of one side of regular triangle T is 2 × r1, so area S0 thereof is obtained by the following equation (2).

$$S0 = \sqrt{3}\, r1^2 \qquad (2)$$

Next, area S1 of the hatched portions in regular triangle T is obtained by the following equation (3).

$$S1 = (r1^2 - r2^2)\,\pi \frac{60}{360} \times 3 \qquad (3)$$

Proportion R1 of the area other than the bold line portions when viewed in plan, and the relationship between radii r1 and r2 are obtained by the following equations (4) and (5), respectively.

$$R1 = (S0 - S1) / S0 \qquad (4)$$

$$r2 = r1 \times \sin(\theta) \quad (5)$$

From these results, proportion R1 of the area resulting in a film thickness ratio in a range from 0.8 to 1.2 when viewed in plan is 42% when the film is formed with a film thickness ratio of 1.0 ($\theta$ = 36.8°), or 60% when the film is formed with a film thickness ratio of 1.2 ($\theta$ = 48.1°), in the model of the above-described comparative example.

In the first exemplary embodiment, the proportion of the area resulting in a film thickness ratio in a range from 0.8 to 1.2 is 60% or greater when viewed in plan, which is sufficiently greater than 42%, the proportion obtained by the model in which merely hemispheres are densely arrayed and no special design consideration is made. This means that the particular structure of the first exemplary embodiment can provide the effect of the anti-reflection layer sufficiently.

In the second exemplary embodiment, the proportion of the area resulting in a film thickness ratio of from 0.8 to 1.2 is 70% or greater when viewed in plan, which is also sufficiently greater than 60%, the proportion obtained by the model in which merely hemispheres are densely arrayed and no special design consideration is made. This means that the particular structure of the second exemplary embodiment can also provide the effect of the anti-reflection layer sufficiently.

As described above, anti-reflection members 10 and 10A of the first and second exemplary embodiments can obtain the characteristics of AG technique by fine uneven structure 20 of the anti-glare layer, and good anti-reflection performance by anti-reflection layers 14 and 14A, respectively. Thus, anti-reflection members 10 and 10A having high anti-reflection performance are obtained.

In addition, according to anti-reflection members 10 and 10A of the first and second exemplary embodiments, grooves or recessed portions surrounded by steep inclined surfaces can be reduced by controlling the inclination angle of fine uneven structure 20. As a result, the visibility deterioration due to contaminants adhering to the grooves or recessed portions can also be suppressed.

In the foregoing first and second exemplary embodiments, examples in which a plurality of spherical surface-shaped convex portions 21 are formed as fine uneven structure 20. However, the shape of the unevenness is not limited thereto.

The foregoing first and second exemplary embodiments achieve desirable film thickness of anti-reflection layers 14 and 14A by controlling the inclination angle of fine uneven structure 20 and forming anti-reflection layer 14 having a film thickness ratio of 1 or anti-reflection layer 14A having a film thickness ratio of 1.2 onto the surface having an inclination angle of zero. However, the film formed on the surface having an inclination angle of zero need not have a film thickness ratio from 0.8 to 1.2. Even when the film formed on the surface having an inclination angle of zero has a film thickness ratio of 1.2 or greater, it is possible to control the film thickness variations of each of anti-reflection layers 14 and 14A to be within a film thickness ratio of ±20%, which is a low reflectivity region, by way of forming the inclination angles of fine uneven structure 20. It is also possible to control the proportion of the area resulting in such an inclination angle to be a certain proportion or greater.

Furthermore, as illustrated in Figs. 11A to 11D, the shape of the anti-reflection member is not limited to any particular shape. It is possible to employ anti-reflection member 10B in a plate shape as shown in Fig. 11A, anti-reflection member 10C in a film shape as shown in Fig. 11B, anti-reflection member 10D in a belt-like shape as shown in Fig. 11C, or anti-reflection member 10E in a block-like shape as shown in Fig. 11D. In each of the shapes of anti-reflection members 10B to 10E, it is sufficient that at least one surface is provided with the anti-glare layer and the anti-reflection layer as described above.

Furthermore, the type, the number of laminated layers, and the film thickness of each of the thin films in anti-reflection layers 14 and 14A are not limited to the specific examples illustrated in the drawings, and may be varied in a number of ways. It is desirable that the number of the laminated thin films be four or more.

< Method for Manufacturing Anti-reflection member >

Next, an example of the method for manufacturing an anti-reflection member will be described.

A method for manufacturing an anti-reflection member includes an anti-glare layer forming step and an anti-reflection layer forming step, in the order of processing.

In the anti-glare layer forming step, mold 30 (see Fig. 12C) having a fine uneven structure, transparent substrate 12 (see Figs. 4 to 7), and a curable transparent resin are used. Mold 30 is, for example, a metal mold. Substrate 12 is, for example, a transparent resin or a transparent glass with low haze. Examples of the transparent resin include PET (polyethylene terephthalate), PC (polycarbonate), and acrylic resin. An applicable example of the curable resin includes an ultraviolet curable transparent resin.

Mold 30 has an uneven surface with controlled inclination angles. The uneven surface of mold 30 is formed such that a surface having an inclination angle that results in a film thickness variation of the anti-reflection layer falling within ±20%, inclusive, in terms of film thickness occupies 60% or greater of the transferred uneven surface. The film thickness variation originates from a variation in the inclination angle. Specifically, mold 30 for preparing anti-reflection member 10 of the first exemplary embodiment is formed such that the portion having an inclination angle of equal to or less than 36.8° occupies 60% or greater of the transferred uneven surface. Mold 30 for preparing anti-reflection member 10A of the second exemplary embodiment is formed such that the portion having an inclination angle of equal to or less than 48.1° occupies 60% or greater of the transferred uneven surface. The method for preparing mold 30 will be described later.

In the anti-glare layer forming step, the curable transparent resin is cured on a top surface of substrate 12, in a shape in which unevenness of mold 30 is transferred by molding using mold 30. As a result, transparent fine uneven structure 20 is added on the top surface of substrate 12, whereby an anti-glare layer is formed.

In the anti-reflection layer forming step, a film forming process by a dry process or a wet process is performed a plurality of times for substrate 12 having fine uneven structure 20. Each of the plurality of times of the film forming process is performed while the film thickness of the thin film is being controlled. When manufacturing anti-reflection member 10 of the first exemplary embodiment, the film thickness is controlled so that an anti-reflection layer having a film thickness ratio of 1 is formed on a surface having an inclination angle of 0°. When manufacturing anti-reflection member 10A of the second exemplary embodiment, the film thickness is controlled so that an anti-reflection layer having a film thickness ratio of 1.2 is formed on a surface having an inclination angle of 0°. As a result, a predetermined anti-reflection layer is formed over fine uneven structure 20 of the anti-glare layer.

The above-described process makes it possible to manufacture anti-reflection member 10 of the first exemplary embodiment and anti-reflection member 10A of the second exemplary embodiment.

It is possible that the method for manufacturing an anti-reflection member may further include an additional film-forming step between the anti-glare layer forming step and the anti-reflection layer forming step.

< Method for Preparing Mold >

Next, examples of the method for preparing mold 30 used in the anti-glare layer forming step will be described.

Figs. 12A to 12C are views for illustrating a first example of the method for preparing the mold. Fig. 12A is an illustrative view of the first step, Fig.12B is an illustrative view of the second step, and Fig. 12C is a schematic view illustrating the final shape of the mold.

In the first example of the method of preparing mold 30, material member for mold (hereinafter referred as mold member) 31 is first processed by a blasting process, an etching process, or electrical discharge machining, so as to form unevenness in one surface of mold member 31 at an optical pitch that can provide an anti-glare effect, as illustrated in Fig. 12A. Next, as illustrated in Fig. 12B, lower end portions of the unevenness are removed by polishing or etching. The proportion of the area that results in a large inclination angle can be adjusted by a processing amount of polishing or etching in Fig. 12B.

This makes it possible to prepare mold 30 having such unevenness that fine uneven structure 20 of the first or second exemplary embodiment is transferred, as illustrated in Fig. 12C.

Figs. 13A to 13C are views for illustrating a second example of the method for preparing the mold. Fig. 13A is an illustrative view of the first step, Fig.13B is an illustrative view of the second step, and Fig. 13C is a schematic view illustrating the final shape of the mold.

In the second example of the method of preparing mold 30, one surface of mold member 31 is first processed by a blasting process or an etching process to form unevenness in one surface of mold member 31 at an optical pitch causing an anti-glare effect, as illustrated in Fig. 13A. Next, as illustrated in Fig. 13B, an additional blasting process is performed using particles 32 having a smaller diameter than each recessed portion of the unevenness. In the additional blasting process, thin portions such as the lower end portions of the unevenness are removed in a greater amount, while thicker portions such as the central parts of the recessed portions are removed in a smaller amount. This makes it possible to prepare mold 30 having a fine uneven structure from which the areas with large inclination angles have been removed, as illustrated in Fig. 13C.

Fig. 14 is a schematic view illustrating a fine uneven structure prepared using the mold shown in Fig. 13C.

Fine uneven structure 20A shown in Fig. 14 can be made by forming the anti-glare layer using mold 30 of the second example. Fine uneven structure 20A is capable of controlling the proportion of the surface having an inclination angle exceeding a specific angle (indicated by bold lines in the figure) to a predetermined proportion or less.

Figs. 15A and 15B are views for illustrating a third example of the method for preparing a mold for forming the anti-glare layer. Fig. 15A is an illustrative view of the first step, and Fig. 15B is a schematic view illustrating the final shape of the mold.

In the third example of the method of preparing mold 30, mold member 31 is processed by electrical discharge machining with the use of electrode 40 provided with fine pattern 45, as illustrated in Fig. 15A. This makes it possible to prepare mold 30 having uniform fine uneven shapes according to fine pattern 45, as illustrated in Fig. 15B.

Fig. 16 is a schematic view illustrating a fine uneven structure formed by using the mold shown in Fig. 15B.

Fine uneven structure 20B having uniform uneven shapes as shown in Fig. 16 can be prepared by forming the anti-glare layer using mold 30 of the third example. Fine uneven structure 20B is, for example, an uneven structure having a trapezoidal cross-sectional shape. This makes it possible to control the inclination angle so that the film thickness variation of the anti-reflection layer is within ±20%, inclusive, in terms of film thickness over the entire area of fine uneven structure 20B.

Hereinabove, exemplary embodiments of the present invention have been described.

The foregoing exemplary embodiments have shown examples in which the anti-reflection member of the present invention is obtained by a structure having an anti-glare layer and an anti-reflection layer. However, the anti-reflection member of the present invention can also be achieved by a structure in which the anti-glare layer and the anti-reflection layer are not distinguished, such as a structure in which a moth-eye structure is simultaneously formed on a surface of a fine uneven shape. The anti-reflection member of the present invention can also be achieved by a structure in which the anti-glare layer and the anti-reflection layer are not distinguished, such as by adjusting the refractive index of the material for the anti-glare layer to cause the effect of reducing the specular reflection.

The foregoing exemplary embodiments have shown the examples in which the anti-glare layer is prepared by a fine uneven structure without a filler being filled therein. However, the anti-glare layer may be prepared by a structure filled with a filler for diffusing reflected light, as long as the reflection characteristic values according to the present invention are obtained.

INDUSTRIAL APPLICABILITY

The present invention is applicable to an anti-reflection member for preventing reflection on display devices.

REFERENCE MARKS IN THE DRAWINGS

| | |
|---|---|
| 10, 10A, 10B, 10C, 10D, 10E | anti-reflection member |
| 12, 50 | substrate |
| 13 | anti-glare layer |
| 14, 14A | anti-reffection layer |
| 20, 20A, 20B | fine uneven structure |
| 32 | particle |

## Claims

**1.** An anti-reflection member having reflection characteristics,
wherein a specular reflection component of reflected light is 0.15% or less, and
a diffuse reflection component of the reflected light is in a range from 0.25% to 0.65%, inclusive.

**2.** The anti-reflection member according to claim 1 comprising:

an anti-reflection layer; and
an anti-glare layer.

**3.** The anti-reflection member according to claim 2,
wherein the anti-reflection layer is formed over the anti-glare layer.

**4.** The anti-reflection member according to claim 2 or 3,
wherein the anti-glare layer has a fine uneven structure which diffuses incident light, on a surface of the anti-glare layer.

**5.** The anti-reflection member according to claim 2 or 3,
wherein the anti-glare layer is formed of a transparent body not filled with a filler for diffuse reflection, the anti-glare layer has a fine uneven structure which diffuses incident light, on a surface of the transparent body.

**6.** The anti-reflection member according to any one of claims 2 to 5,

wherein the anti-reflection layer includes four or more laminated layers of thin films.

7. The anti-reflection member according to claim 2,
wherein the anti-reflection layer is formed over the anti-glare layer,
the anti-glare layer has a fine uneven structure which diffuses incident light, on a surface of the anti-glare layer, and in the anti-glare layer, 60% or greater of the surface in which the fine uneven structure is formed has an inclination angle that results in a film thickness variation of the anti-reflection layer falling within ±20%, inclusive, in terms of film thickness, where the film thickness variation of the anti-reflection layer is caused by a variation of the inclination angle in a surface of the fine uneven structure.

FIG. 1

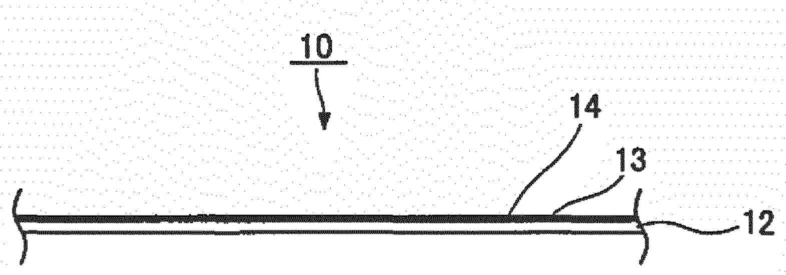
10
14
13
12

FIG. 2

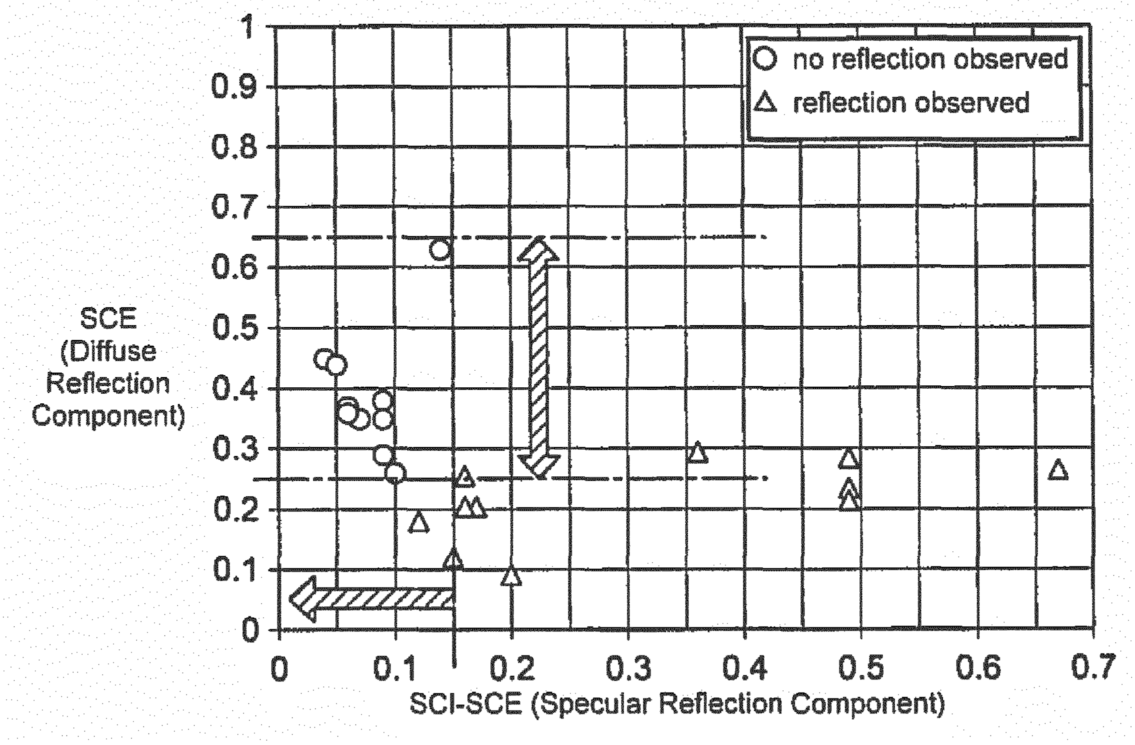
no reflection observed
reflection observed
SCE (Diffuse Reflection Component)
SCI-SCE (Specular Reflection Component)
0
0.1
0.2
0.3
0.4
0.5
0.6
0.7
0.8
0.9
1

FIG. 3

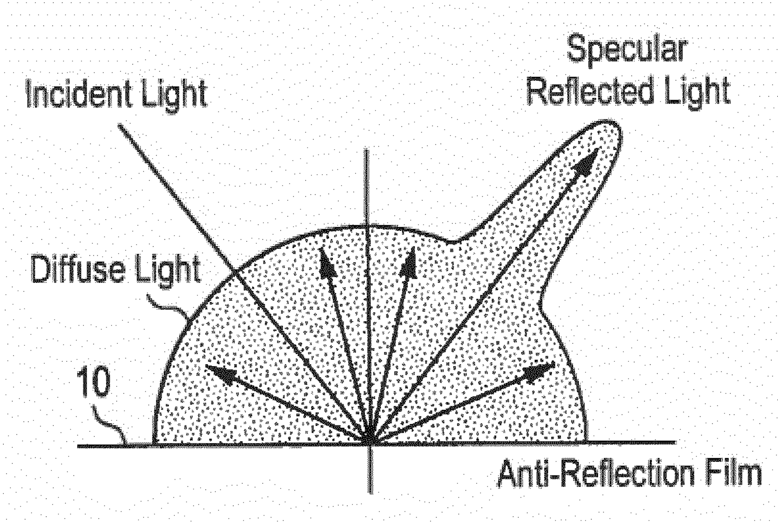
Specular
Reflected Light
Incident Light
Diffuse Light
10
Anti-Reflection Film

FIG. 4

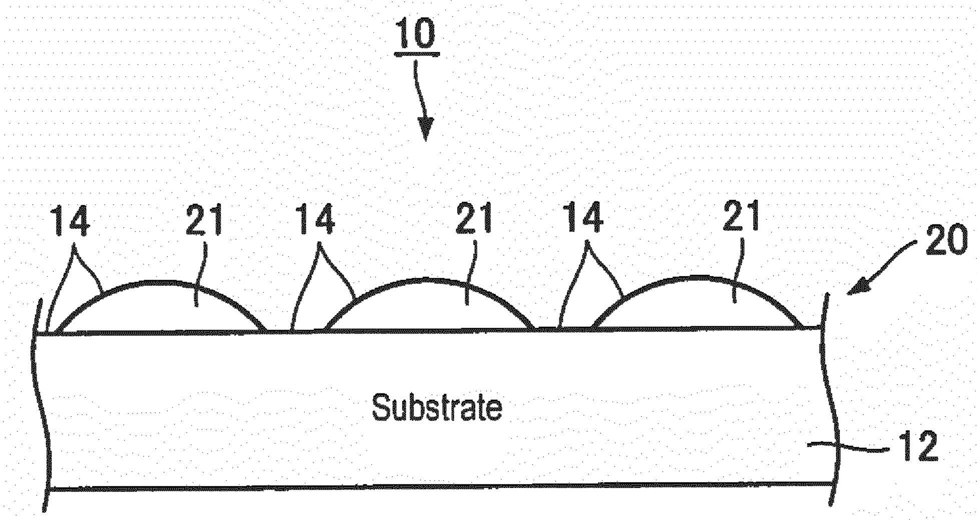


FIG. 5

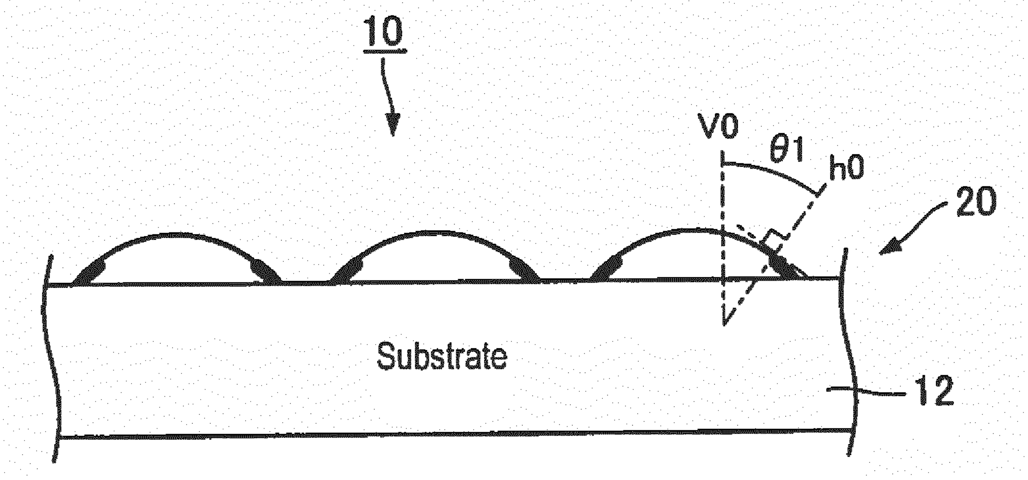

FIG. 6

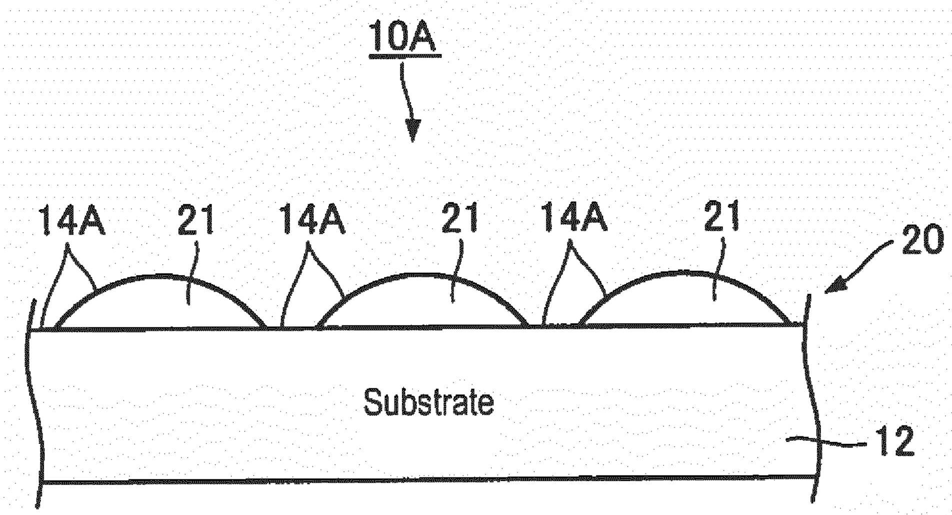
10A
14A
21
14A
21
14A
21
20
Substrate
12

FIG. 7

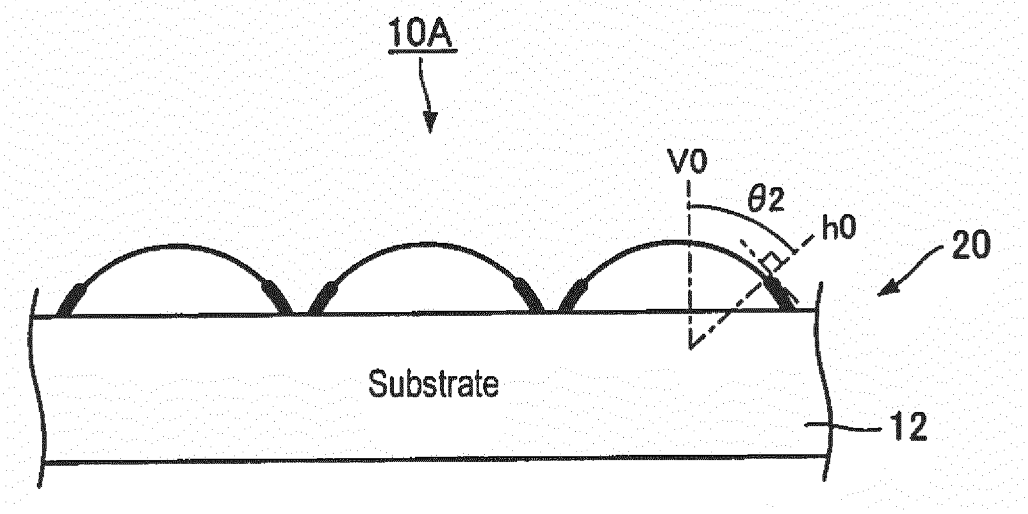
10A
V0
θ2
h0
20
Substrate
12

FIG. 8

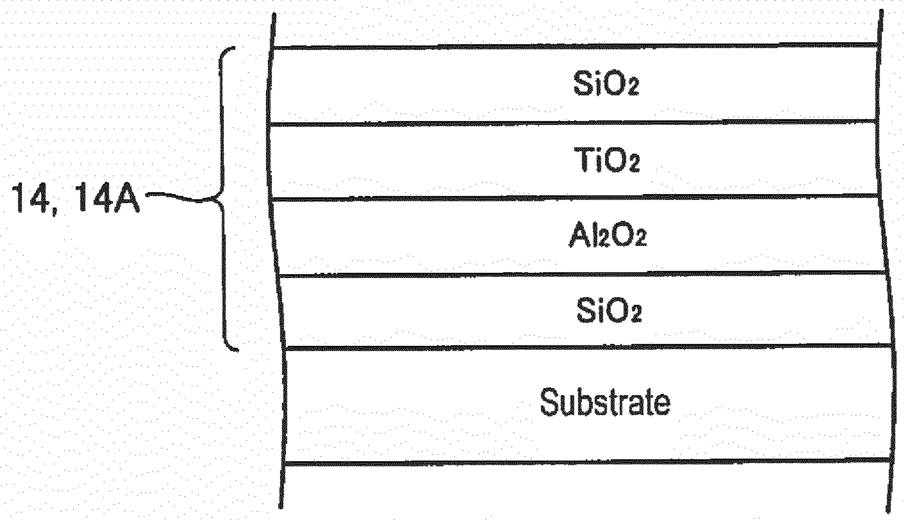
SiO2
TiO2
14, 14A
Al2O2
SiO2
Substrate

FIG. 9

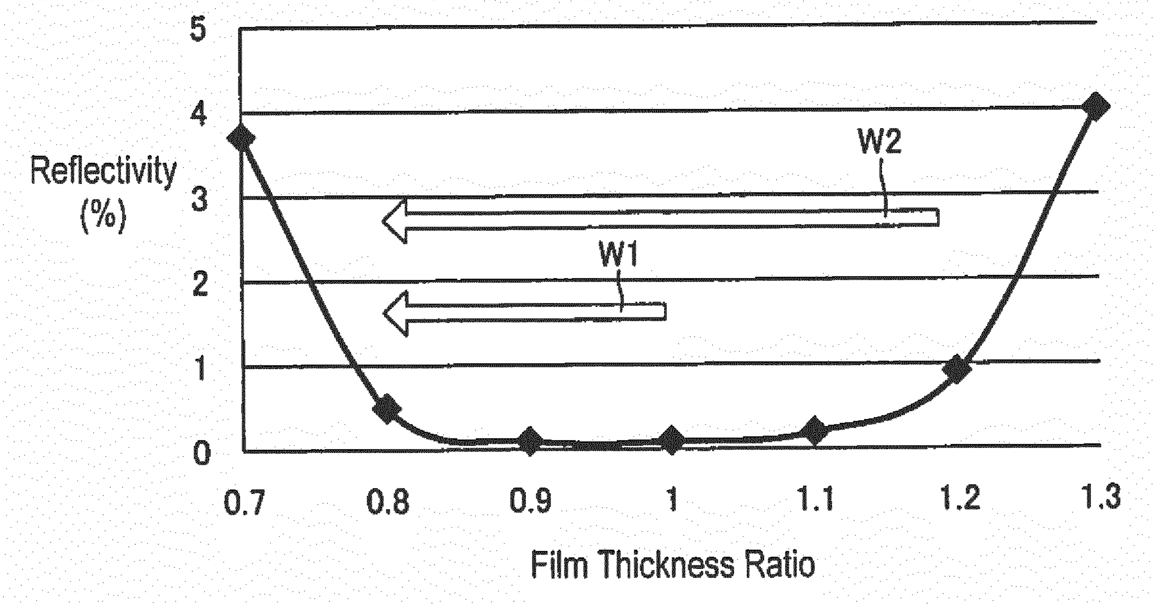
5
4
Reflectivity
(%)
3
2
1
0
W2
W1
0.7
0.8
0.9
1
1.1
1.2
1.3
Film Thickness Ratio

FIG. 10A

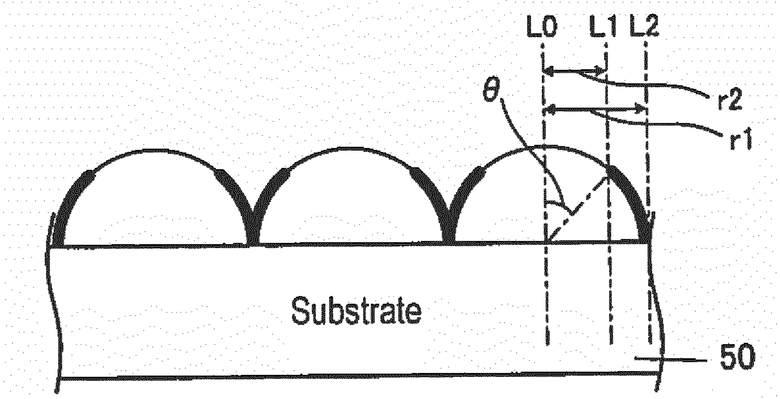


FIG. 10B

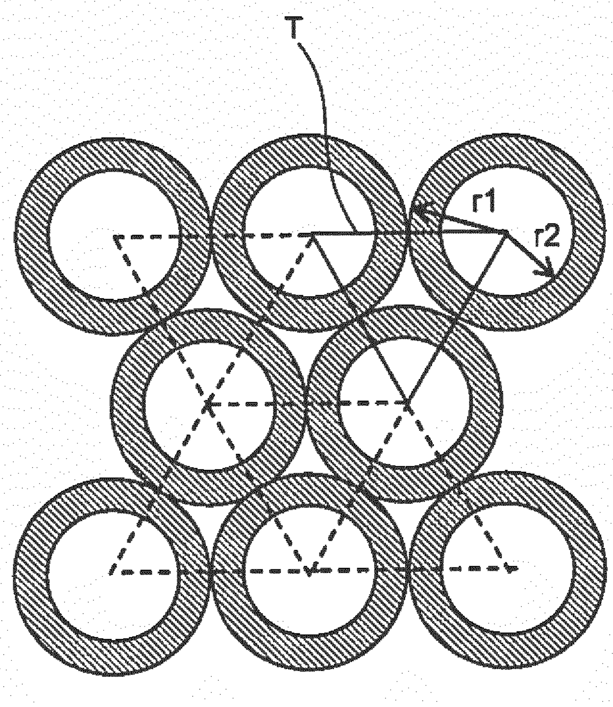

FIG. 11A

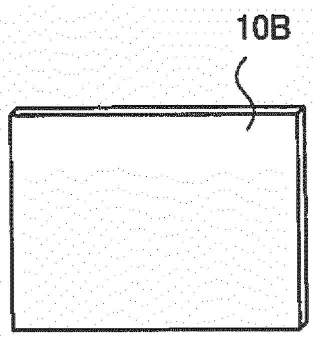


FIG. 11B

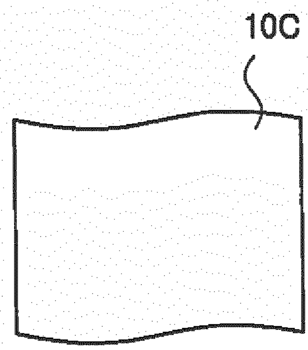


FIG. 11C

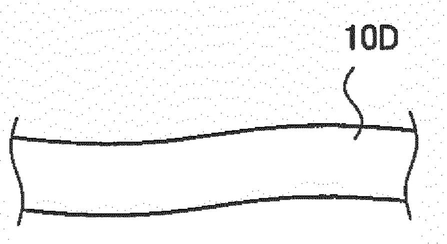


FIG. 11D

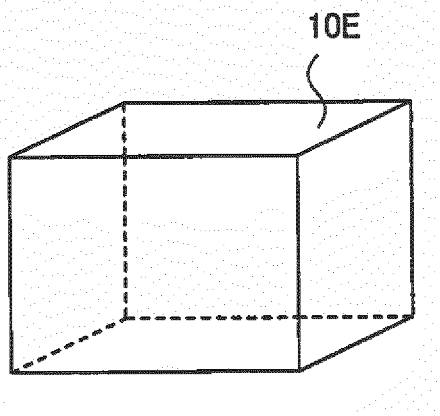

FIG. 12A

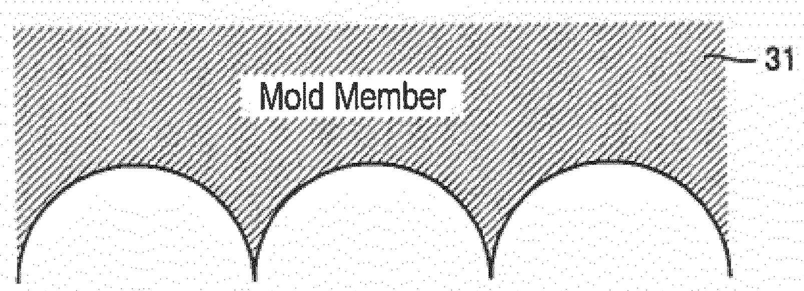


FIG. 12B

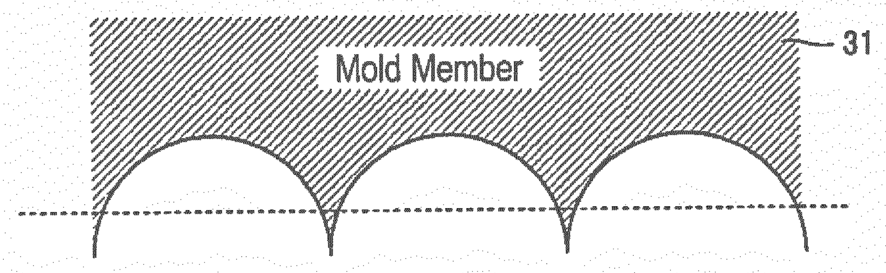


FIG. 12C

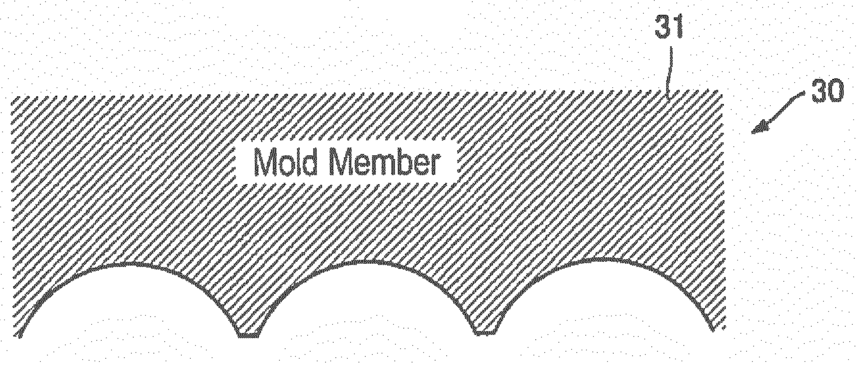

FIG. 13A

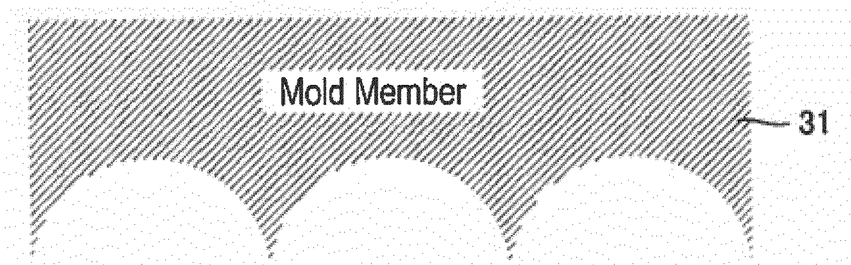


FIG. 13B

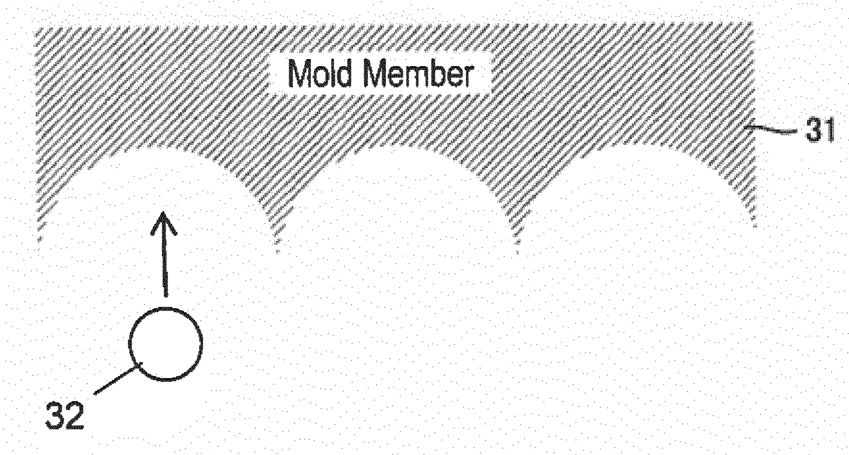


FIG. 13C

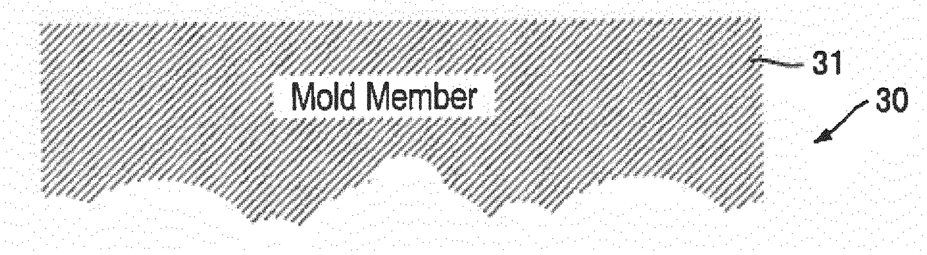

FIG. 14

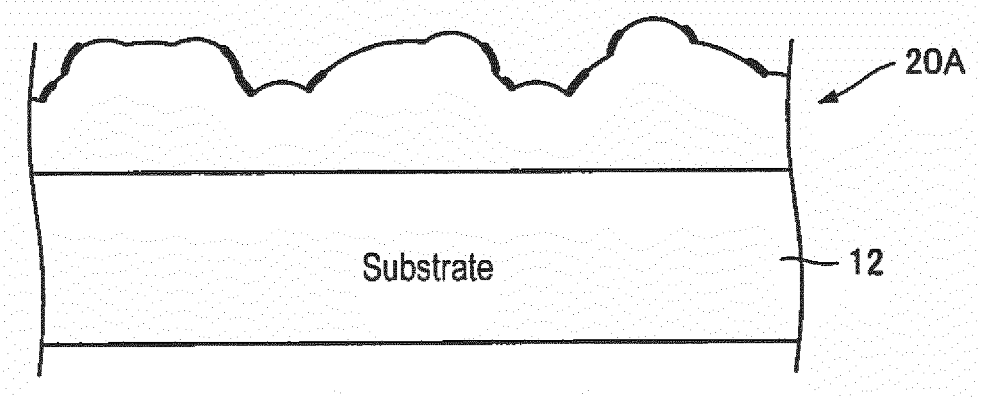

FIG. 15A

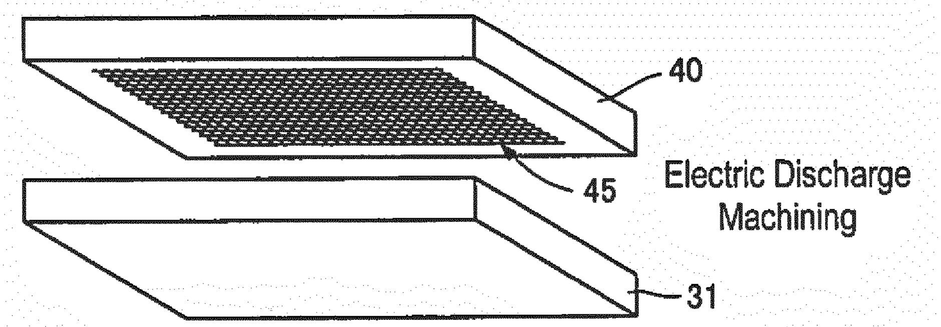


FIG. 15B

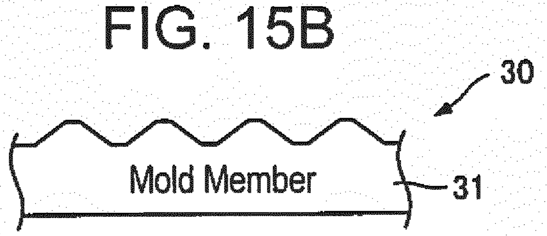


FIG. 16

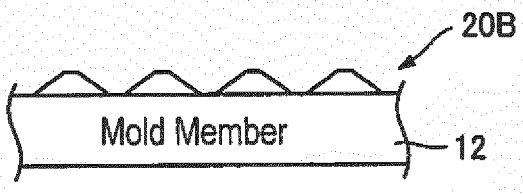

**INTERNATIONAL SEARCH REPORT**

International application No. PCT/JP2015/004542

A. CLASSIFICATION OF SUBJECT MATTER
*G02B1/115*(2015.01)i, *B32B3/30*(2006.01)i, *B32B7/02*(2006.01)i, *G02B5/02* (2006.01)i

According to International Patent Classification (IPC) or to both national classification and IPC

B. FIELDS SEARCHED

Minimum documentation searched (classification system followed by classification symbols)
G02B1/115, B32B3/30, B32B7/02, G02B5/02

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2015 |
| Kokai Jitsuyo Shinan Koho | 1971-2015 | Toroku Jitsuyo Shinan Koho | 1994-2015 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2010-079101 A (Fujifilm Corp.), 08 April 2010 (08.04.2010), paragraphs [0017] to [0030], [0239] to [0294]; fig. 1(b) & US 2010/0079867 A1 paragraphs [0048] to [0069], [0292] to [0367]; fig. 1(b) & CN 101685177 A | 1-4,6-7 |
| X | JP 2010-079099 A (Fujifilm Corp.), 08 April 2010 (08.04.2010), paragraphs [0012] to [0014], [0039], [0042], [0108] to [0160] & US 2010/0079868 A1 paragraphs [0047] to [0061], [0086], [0089], [0178] to [0255] & CN 101685168 A | 1-4,6-7 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 07 December 2015 (07.12.15) | 22 December 2015 (22.12.15) |

| Name and mailing address of the ISA/ | Authorized officer |
|---|---|
| Japan Patent Office<br>3-4-3,Kasumigaseki,Chiyoda-ku,<br>Tokyo 100-8915,Japan | <br>Telephone No. |

Form PCT/ISA/210 (second sheet) (July 2009)

**INTERNATIONAL SEARCH REPORT**

International application No.
PCT/JP2015/004542

C (Continuation). DOCUMENTS CONSIDERED TO BE RELEVANT

| Category* | Citation of document, with indication, where appropriate, of the relevant passages | Relevant to claim No. |
|---|---|---|
| X | JP 2010-078886 A (Fujifilm Corp.), 08 April 2010 (08.04.2010), paragraphs [0020] to [0023], [0144] to [0148], [0221] to [0282] (Family: none) | 1-4,6-7 |
| X | JP 2009-086410 A (Konica Minolta Opto, Inc.), 23 April 2009 (23.04.2009), paragraphs [0033] to [0043], [0070] to [0076], [0371] to [0424]; fig. 1 (Family: none) | 1-7 |
| X | JP 2005-195819 A (Daicel Chemical Industries, Ltd.), 21 July 2005 (21.07.2005), paragraphs [0018] to [0024], [0039] to [0040], [0062] (Family: none) | 1-7 |
| Y | JP 2011-221197 A (Suntecopt Corp.), 04 November 2011 (04.11.2011), paragraphs [0011], [0024] to [0026]; fig. 10 & US 2011/0249337 A1 paragraphs [0026], [0041] to [0042]; table 1; fig. 10 | 1-7 |
| A | JP 2012-128321 A (Canon Inc.), 05 July 2012 (05.07.2012), paragraph [0056]; fig. 6 (Family: none) | 1-7 |
| A | JP 2011-095310 A (Nippon Electric Glass Co., Ltd.), 12 May 2011 (12.05.2011), paragraphs [0024], [0039] (Family: none) | 1-7 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP H06234175 B
- JP 2008084604 A